# EUROPEAN PATENT SPECIFICATION

(11) **EP 4 343 957 B1**
(45) Date of publication and mention of the grant of the patent: **22.04.2026**
(21) Application number: 22935916.1
(22) Date of filing: 14.12.2022
(51) Int. Cl.: H01M 50/581, H01M 50/105, H01M 50/342, H01M 50/30, H01M 10/052

(54) **BATTERY CASE AND SECONDARY BATTERY**
BATTERIEGEHÄUSE UND SEKUNDÄRBATTERIE
BOÎTIER DE BATTERIE ET BATTERIE SECONDAIRE

(30) Priority: 31.03.2022 KR 20220040251
(43) Date of publication of application: 27.03.2024
(73) Proprietor: LG Energy Solution, Ltd., Seoul 07335 (KR)
(72) Inventor: LEE, Hanyoung, Daejeon 34122 (KR)
(74) Representative: Plasseraud IP
(86) International application number: PCT/KR2022/020385
(87) International publication number: WO 2023/191246

(56) References cited:
- WO-A1-2012/073432
- WO-A1-2021/225237
- JP-A- 2004 103 415
- JP-A- H06 290 812
- KR-A- 20130 019 477
- KR-A- 20160 004 247
- KR-A- 20190 084 794
- KR-A- 20200 069 752

## Description

### [Technical Field]

The present invention relates to a battery case and a secondary battery. More particularly, the present invention relates to a battery case capable of securing the stability of a secondary battery by quickly adsorbing gas generated according to activation or degradation of the secondary battery by opening a gas adsorption pack accommodated inside the case without an additional system or sensing device and allowing the secondary battery to be operated even after the gas adsorption pack is opened; and a secondary battery.

### [Background Art]

A secondary battery is a rechargeable battery manufactured using a material in which oxidation and reduction processes between current and the material can be repeated many times. That is, when a reduction reaction is performed on the material by current, the battery is charged, and when an oxidation reaction is performed on the material, electricity is discharged from the battery.

In general, types of secondary batteries include nickel cadmium batteries, nickel hydrogen batteries, lithium secondary batteries, and lithium ion polymer batteries. In addition to small products such as digital cameras, P-DVDs, MP3Ps, mobile phones, PDAs, portable game devices, power tools, and E-bikes, these secondary batteries are used in large products requiring high power, such as electric vehicles and hybrid vehicles, power storage devices for storing surplus generated power or renewable energy, and power storage devices for backup.

For example, the lithium secondary battery is formed by laminating a positive electrode, a separator, and a negative electrode, and charging and discharging proceeds while repeating the process of intercalating and deintercalating lithium ions from a lithium metal oxide as a positive electrode to a graphite electrode as a negative electrode. These materials are selected in consideration of the lifespan, charge/discharge capacity, temperature characteristics, and stability of the battery.

Depending on the shape of a battery case, the lithium secondary batteries are classified into a can-type secondary battery in which an electrode assembly is embedded in a metal can and a pouch-type secondary battery in which an electrode assembly is embedded in a pouch of an aluminum laminate sheet. The can-type secondary batteries are classified into cylindrical batteries and prismatic batteries.

When the voltage of the lithium secondary battery exceeds an operating voltage, constituent materials decompose to generate ignitable gas, or the battery deteriorates and the structure of a positive electrode collapses to generate gas. The generated gas increases the resistance and internal pressure of the battery. The battery may explode if left unattended in this condition.

In general, in the case of prismatic and cylindrical secondary batteries, to secure safety when gas is generated, a method of bonding a safety device (safety vent) to a cap plate, which is a top plate of the battery, is used. When the internal temperature of the battery increases abnormally, the safety device prevents the battery from exploding by discharging internal gas to the outside.

However, in the case of pouch-type secondary batteries, gas discharge is determined by the sealing strength of a pouch without a separate safety device. Accordingly, it is difficult to release gas by opening the pouch at a specific temperature. In addition, even when the risk of explosion may be reduced by releasing gas by opening the pouch, there is still a problem that the secondary battery cannot be driven any more after opening the pouch.

Therefore, it is necessary to develop a means that does not deteriorate the overall performance of a battery while securing battery stability by improving increase in internal temperature due to gas generated from the lithium secondary battery and the resulting battery explosion, ignition, and inoperability.

### [Related Art Documents]

### [Patent Documents]

KR 2013-0078953 A

WO2012/073432A describes a battery pack comprising a secondary battery which is equipped with a safety valve, a gas absorption section which comprises a gas absorbent typified by zeolite and a container for accommodating the gas absorbent in a hermetically sealed manner, and a housing which can accommodate the secondary battery and the gas absorption section, wherein the safety valve can discharge a gas generated in the inside of the secondary battery upon the occurrence of any trouble, and wherein the container has the main surface that faces the safety valve or the like and at least the main surface of the container is broken by the action of the heat or pressure of the gas when the gas is discharged to thereby open the container.

WO2021/225237A1 describes a battery module comprising a plurality of battery cells laminated vertically or horizontally; and a fire extinguishing unit located near the battery cells, wherein the fire extinguishing unit comprises a fire extinguishing pack having an extinguishing material embedded therein, and at least one crushing unit interposed between the battery cells and the fire extinguishing pack.

JP H06 290812 describes a chemical battery including a neutralizer container storing a neutralizer, which suppresses a battery reaction. The neutralizer container is provided with an opening means emitting the neutralizer in response to gas or heat of reaction in case of a battery malfunction.

### [Disclosure]

### [Technical Problem]

Therefore, the present invention has been made in view of the above problems, and it is one object of the present invention to provide a battery case capable of securing battery stability by delaying the time point at which the battery case explodes due to gas by quickly adsorbing and removing gas generated inside a battery by automatically opening a gas adsorption pack accommodated inside the battery case without recognition work through an additional system or sensing device. This technical problem is solved by the subject-matter of the appended claims.

It is another object of the present invention to provide a secondary battery including the battery case, an electrode assembly accommodated inside the battery case, and an electrolyte configured to be charged inside the battery case.

The above and other objects can be accomplished by the present invention described below.

### [Technical Solution]

In accordance with one aspect of the present invention, provided is a battery case intended to accommodate an electrode assembly and an electrolyte configured to be charged inside the battery case, including a battery case cover and a gas adsorber accommodated inside a battery case, wherein, in the gas adsorber, when an internal temperature of the case increases, a gas adsorption pack is opened.

The gas adsorber includes the gas adsorption pack filled with a gas adsorbent, and a shape memory alloy that is bent when internal temperature increases and penetrates the gas adsorption pack.

The shape memory alloy may preferably include one or more selected from the group consisting of nickel-titanium alloy (Ni-Ti), copper-zinc alloy (Cu-Zn), copper-zinc-aluminum alloy (Cu-Zn-Al), copper-cadmium alloy (Cu-Cd), nickel-aluminum alloy (Ni-Al), copper-zinc-aluminum alloy (Cu-Zn-Al), and copper-aluminum-nickel alloy (Cu-Al-Ni).

The shape memory alloy may have a shape recovery temperature of preferably 70 to 100 °C.

The shape memory alloy may preferably have an one-way shape memory effect.

The gas adsorber may be preferably configured to be attached to an inner wall of the case cover.

The gas adsorbent may preferably include one or more selected from the group consisting of a gas adsorbent molecular sieve, a gas adsorbent metal, and a gas adsorption material.

The gas adsorbent molecular sieve may preferably include one or more selected from the group consisting of silica gel, carbon fiber, a porous carbon material, a porous metal oxide, porous gel, and zeolite.

The gas adsorbent metal may preferably include one or more selected from the group consisting of nickel (Ni), platinum (Pt), palladium (Pd), calcium (Ca), strontium (Sr), barium (Ba), thallium (Tl), zirconium (Zr), hafnium (Hf), vanadium (V), niobium (Nb), tantalum (Ta), chromium (Cr), molybdenum (Mo), and tungsten (W).

The gas adsorption material may preferably include one or more selected from the group consisting of BaTiO₃, PB (Mg₃Nb_{2/3}) O₃-PbTiO₃ (PMN-PT) , hafnia (HfO₂) , SrTiO₃, SnO₂, CeO₂, MgO, NiO, CaO, ZnO, ZrO₂, Y₂O₃, Al₂O₃, TiO₂, sodium hydroxide (NaOH), calcium hydroxide (Ca(OH)₂), and potassium hydroxide (KOH).

The gas adsorption pack may preferably include one or more selected from the group consisting of an olefin-based resin, a fluorine-based resin, and a polyamide-based resin.

The gas adsorber may be preferably installed so that the shape memory alloy is positioned between an inner wall of the case cover and the gas adsorption pack, or the shape memory alloy is positioned on a side of the gas adsorption pack positioned on an inner wall of the case cover.

In accordance with another aspect of the present invention, provided is a secondary battery including the battery case, an electrode assembly accommodated inside the battery case, and an electrolyte configured to be charged inside the battery case.

Preferably, in the secondary battery, a gas adsorption pack may be blocked from outside air or may be opened.

The secondary battery may be preferably a pouch-type battery.

### [Advantageous Effects]

According to the present invention, when gas is generated due to collapse of the structure of a positive electrode due to deterioration of a secondary battery, or when a secondary battery is subjected to abnormal operating conditions such as overcharging or exposure to high temperatures, as an internal electrolyte decomposes, gas is generated, which increases the internal temperature of the battery. At this time, a gas adsorption pack accommodated inside a battery case is automatically opened to quickly adsorb the gas to secure battery stability, prevent deformation of the battery case, and reduce battery resistance.

In addition, since the battery case according to the present invention does not require an additional sensing device to check the temperature or voltage of a battery, a process of manufacturing the battery case is easy, and malfunction due to an error in the sensing device can be prevented.

In addition, by sensitively reacting to changes in the internal temperature of the battery case, battery stability can be further improved, and a battery can be operated even after a gas adsorbent is opened without damaging the battery case.

### [Description of Drawings]

The following drawings attached to this specification illustrate embodiments of the present invention, and serve to further understand the technical idea of the present invention together with the detailed description to be described later, so the present invention is not limited to the matters described in these drawings.
FIG. 1 illustrates the inside of a conventional battery case filled with an electrode assembly and an electrolyte.
FIG. 2 illustrates a battery case according to one embodiment of the present invention, and shows a side view of a gas adsorber accommodated inside the battery case filled with an electrode assembly and an electrolyte.
FIG. 3 shows a top view of a gas adsorber accommodated inside a battery case according to one embodiment of the present invention.
FIG. 4 illustrates a battery case according to one embodiment of the present invention, and shows a side view of a gas adsorber accommodated inside the battery case filled with an electrode assembly and an electrolyte.
FIG. 5 shows a top view of a gas adsorber accommodated inside a battery case according to one embodiment of the present invention.
FIG. 6 is a diagram for explaining change in a gas adsorber according to increase in internal temperature due to gas generation in a battery case according to one embodiment of the present invention.
FIG. 7 illustrates a shape memory alloy according to one embodiment of the present invention and the end thereof formed in a pointed shape.
FIG. 8 includes diagrams for explaining cross-sections of shape memory alloys having an elongated shape according to an embodiment of the present invention.
FIG. 9 includes perspective views for explaining before and after deformation of a shape memory alloy according to an embodiment of the present invention.
FIG. 10 shows various shapes of a thin-film type memory alloy according to an embodiment of the present invention.

### [Best Mode]

The present inventors, while studying a method of removing gas generated inside a secondary battery, confirmed that, when a gas adsorption pack filled with a gas adsorbent and a shape memory alloy capable of penetrating the gas adsorption pack by being bent when internal temperature increases due to gas generation were provided inside a battery case, gas was removed before the battery case was deformed and exploded due to increase in temperature due to gas generated inside the battery case. By removing the gas in this way, battery stability was secured, and the resistance of the battery was reduced, so that the battery case was not damaged and the battery could be operated even after the gas adsorption pack was opened. Based on these results, the present inventors conducted further studies to complete the present invention.

Hereinafter, exemplary embodiments of the present invention are described in detail so as for those of ordinary skill in the art to easily implement with reference to the accompanying drawings. However, in describing the operating principle of the preferred embodiment of the present invention in detail, a detailed description of known functions and configurations incorporated herein will be omitted when it may make the subject matter of the present invention unclear.

In addition, the same reference numerals are used for parts having similar functions and actions throughout the drawings. Throughout this specification, it should be understood that when an element is referred to as being "connected to" or "coupled to" another element, the element may be directly connected or coupled to the other element or intervening elements may be present. In addition, in the present invention, it is to be understood that, unless stated otherwise, when a part "comprises" any element, the part may include other elements without excluding other elements.

Detailed description of limiting or adding components may be applied to all inventions unless there is a particular limitation, and is not limited to a specific invention.

A battery case according to one embodiment of the present invention includes an battery case cover 10 and a gas adsorber 20 accommodated inside a case. In the gas adsorber 20, when the internal temperature of the case increases, a gas adsorption pack 21 filled with a gas adsorbent is opened. In this case, by quickly adsorbing and removing gas that causes temperature increase, battery stability may be secured, and battery resistance may be reduced.

The gas adsorber 20 includes the gas adsorption pack 21 filled with a gas adsorbent, and a shape memory alloy 22 that is bent when internal temperature increases and penetrates the gas adsorption pack.

In the present disclosure, the terms "secondary battery", "battery", and "battery cell" refer to devices manufactured by encapsulating an electrode assembly and an electrolyte inside a battery case, unless otherwise specified. In addition, a battery module may be configured by connecting secondary batteries, batteries, and/or battery cells in series, and a battery pack may be configured by connecting a plurality of battery modules in parallel and/or in series according to required charge/discharge capacities.

In the present invention, the battery case cover has an empty space therein, and is formed to accommodate an electrode assembly and an electrolyte in the inner space.

Hereinafter, the gas adsorber 20 will be described in detail.

For example, the gas adsorber 20 may be attached to the inner wall of the battery case cover 10. In this case, charging and discharging of a secondary battery may not be affected.

Based on the position of an electrode assembly 110 accommodated, the gas adsorber 20 may be preferably installed on the inner wall of the upper or lower cover or both inner walls of the upper and lower covers. In this case, by rapidly reducing internal temperature by adsorbing generated gas more rapidly, battery stability may be secured, case deformation may be prevented, and battery resistance may be reduced.

For example, the gas adsorber 20 may be attached to the upper portion of the electrode assembly. In this case, charging and discharging of a secondary battery may not be affected.

For example, the gas adsorber 20 may be fixed to the inner wall of the battery case cover 10 or the upper portion of the electrode assembly with PET tape. In this case, charging and discharging of a secondary battery may not be affected by the gas adsorber 20, and the gas adsorber 20 may not be affected by an electrolyte.

For example, the PET tape may be a polyester film coated with a silicon-based adhesive.

For example, the gas adsorption pack 21 may have a shape similar to that of the case, and may preferably have a prismatic shape or an amorphous shape that can be freely deformed.

A gas adsorbent capable of adsorbing gas is embedded inside the gas adsorption pack 21.

For example, the gas generated inside the secondary battery may be gas generated due to decomposition of an electrolyte or gas generated due to collapse of a positive electrode structure due to battery degradation.

For example, the gas generated due to decomposition of an electrolyte may be oxygen, carbon monoxide (CO), and/or carbon dioxide (CO₂), and the gas generated due to collapse of a positive electrode structure due to battery degradation may be oxygen.

The type of the gas adsorbent is not significantly limited as long as the gas adsorbent is a material capable of easily adsorbing a large amount of gas generated inside a battery, and the gas adsorbent may preferably include one or more selected from the group consisting of a gas adsorbent molecular sieve, a gas adsorbent metal, and a gas adsorption material. In this case, by efficiently adsorbing gas inside the battery, battery stability may be secured, battery resistance may be reduced, and case deformation and explosion may be prevented.

For example, the gas adsorbent molecular sieve may include one or more selected from the group consisting of silica gel, carbon fiber, a porous carbon material, a porous metal oxide, porous gel, and zeolite.

For example, the porous carbon material may include one or more selected from the group consisting of carbon molecular sieve and activated carbon.

The activated carbon may preferably include one or more selected from the group consisting of granular activated carbon, powdered activated carbon, pelletized activated carbon, and activated carbon fiber.

For example, the porous metal oxide may include one or more selected from the group consisting of silica gel, alumina, and a molecular sieve.

The zeolite may be distinguished by the crystal structure thereof, and may include, for example, one or more selected from the group consisting of A-type zeolites, L-type zeolites, β-type zeolites, MFI-type zeolites, and faujasite-type zeolites.

For example, the gas adsorbent metal may include one or more selected from the group consisting of nickel (Ni), platinum (Pt), palladium (Pd), calcium (Ca), strontium (Sr), barium (Ba), thallium (Tl), zirconium (Zr), hafnium (Hf), vanadium (V), niobium (Nb), tantalum (Ta), chromium (Cr), molybdenum (Mo), and tungsten (W).

For example, the gas adsorption material may include one or more selected from the group consisting of BaTiO₃, PB (Mg₃Nb_{2/3}) O₃-PbTiO₃ (PMN-PT), hafnia (HfO₂) , SrTiO₃, SnO₂, CeO₂, MgO, NiO, CaO, ZnO, ZrO₂, Y₂O₃, Al₂O₃, TiO₂, sodium hydroxide (NaOH), calcium hydroxide (Ca(OH)₂), and potassium hydroxide (KOH).

For example, the gas adsorption pack 21 may include a space for accommodating a gas adsorbent, and may be made of a material having a predetermined thickness capable of being pierced or torn by a shape memory alloy.

For example, the gas adsorption pack 21 may include one or more selected from the group consisting of an olefin-based resin, a fluorine-based resin, and a polyamide-based resin. In this case, the gas adsorption pack 21 may not adversely affect the electrolyte.

For example, the olefin-based resin may include one or more selected from the group consisting of polypropylene, polyethylene, polyethylene acrylic acid, and polybutylene.

For example, the polyamide-based resin may include one or more selected from the group consisting of polyamide 4.6, polyamide 6, polyamide 6.6, polyamide 6.10, polyamide 7, polyamide 8, polyamide 9, polyamide 11, polyamide 12, and MXD 6.

The fluorine-based resin may be preferably polytetrafluoroethylene (PTFE).

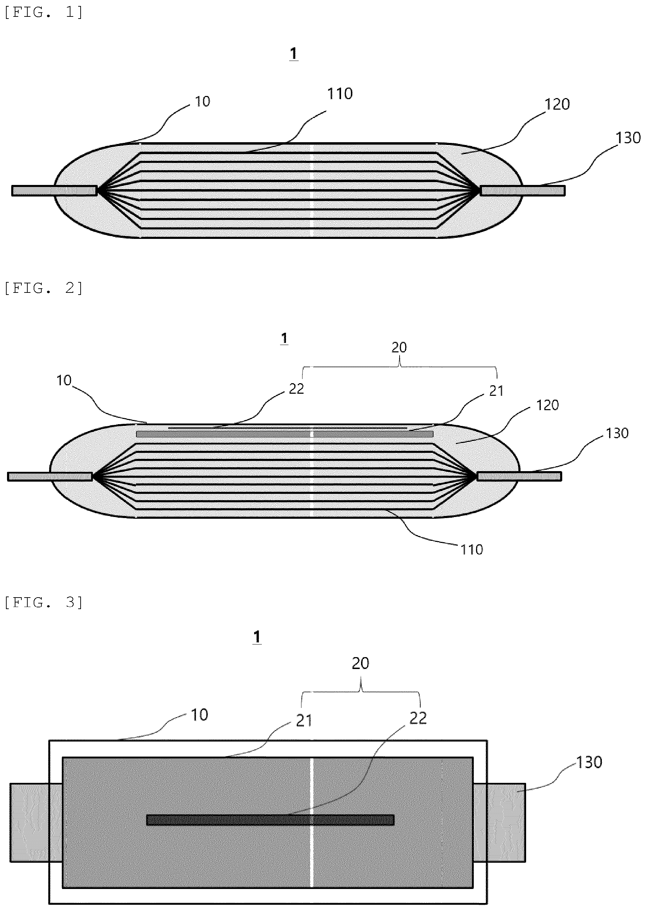

In general, a separate gas removal process is performed to remove gas generated when a secondary battery is overcharged or charge/discharge is repeated, and a separate sensing device is required for this process. However, according to the present invention, as shown in FIGS. 2 to 5, since a gas adsorber is included inside a case, and the gas adsorber includes a gas adsorption pack filled with a gas adsorbent and a shape memory alloy that is bent when internal temperature increases and penetrates the gas adsorption pack, by reacting sensitively to change in internal temperature due to gas generation, gas may be quickly removed, thereby securing battery stability and reducing battery resistance to improve battery performance.

In addition, when gas is generated as a result of battery degradation, a battery may swell and explode. Even in this case, the gas may be removed by opening the gas adsorption pack, thereby greatly reducing a load applied to the secondary battery.

In addition, when a case is partially damaged or opened to remove gas, the stability of a battery is secured, but the function of the battery is impaired. However, according to the present invention, by adsorbing and removing gas without damaging a case, a battery may be driven even after a gas adsorption pack is opened.

For example, when internal temperature increases due to gas generated inside the case, the shape memory alloy 22 is deformed at a predetermined angle and penetrates the gas adsorption pack so that the gas adsorbent is exposed to adsorb and remove the gas.

In the present disclosure, exposure of the gas adsorbent refers to contact between a fluid containing gas and the gas adsorbent, and may mean that the gas adsorbent is discharged into the fluid or that the fluid flows into the gas adsorbent. For example, the fluid may be an electrolyte, an inert gas (e.g., N₂, Ar, etc.), or vapor.

In the present disclosure, a shape memory alloy is an alloy that remembers the original shape thereof and restores the original shape thereof even when the shape memory alloy is deformed by heat or pressure. When a general metal is deformed, bonds within the metal are broken or newly formed, but a shape memory alloy retain bonds within the metal even when deformed, and is restored to the original shape thereof as the deformation is released under certain conditions. When a shape memory alloy is deformed and heated again, the shape memory alloy remembers the shape before being deformed and returns to the original shape thereof. At this time, the strain must be applied below a certain critical temperature, and as a specific example, the strain must be less than about 10 %. Through reheating, the shape memory alloy remembers a crystal structure that should be taken first at high temperature and a shape suitable for the crystal structure. When a shape memory alloy remembers a certain shape, even when the shape memory alloy is deformed into various shapes, the shape memory alloy has the property of returning to the original shape thereof when heated to an appropriate temperature. To impart such a shape memory effect, certain heat treatment is required. In the case of Nitinol, which is a nickel-titanium alloy (Ni-Ti), when the alloy is formed into a certain shape and left fixed at a temperature of 400 to 500 °C for about 30 minutes, the alloy remembers this shape. Once the alloy remembers the shape, the alloy returns to the original shape as long as the alloy is heated above a certain temperature, even when the alloy is deformed several times. This constant temperature is called the "shape recovery temperature". Various shape recovery temperatures may be set by changing conditions.

For example, the shape memory alloy 22 may include one or more selected from the group consisting of nickel-titanium alloy (Ni-Ti), copper-zinc alloy (Cu-Zn), copper-zinc-aluminum alloy (Cu-Zn-Al), copper-cadmium alloy (Cu-Cd), nickel-aluminum alloy (Ni-Al), copper-zinc-aluminum alloy (Cu-Zn-Al), and copper-aluminum-nickel alloy (Cu-Al-Ni). In this case, as the temperature inside a secondary battery increases, a sensitive response may be obtained.

For example, the shape memory alloy may have a shape recovery temperature of 70 to 100 °C, preferably 75 to 90 °C, more preferably 80 to 90 °C. Within this range, swelling of a secondary battery due to increase in internal temperature of the secondary battery may be prevented before battery deformation occurs. That is, battery stability may be secured by perforating or tearing the gas adsorption pack by bending the shape memory alloy.

To set the shape recovery temperature to 70 to 100 °C, for example, the shape memory alloy may be heat-treated at 70 to 100 °C, preferably 75 to 90 °C, more preferably 80 to 90 °C for 15 to 40 minutes, preferably 20 to 35 minutes. Within this range, swelling of a secondary battery due to increase in internal temperature of the secondary battery may be prevented before battery deformation occurs. That is, battery stability may be secured by perforating or tearing the gas adsorption pack by bending the shape memory alloy.

For example, the shape memory alloy may have an one-way shape memory effect. In this case, manufacturing cost and installation space may be reduced.

In the present disclosure, the one-way shape memory effect refers to the recovery of the original shape when a shape memory alloy that memorizes an appropriate shape is deformed at low temperature and then heated above a certain temperature. At this time, even when the shape memory alloy is cooled to low temperature again, the shape memory alloy does not return to the deformed shape before increasing the temperature. Unlike this, the simultaneous memory of a shape at high temperature and a shape at room temperature before increasing temperature is called a two-way shape memory effect or reversible shape memory effect. This is a reversible motion in which the two shapes are repeated through heating and cooling. To obtain the two-way shape memory effect, there is a process problem in that an alloy must be subjected to special heat treatment or configured together with parts such as springs.

For example, the gas adsorber 20 may be attached to the inner wall of the case cover. With this configuration, internal temperature change according to gas generated inside a battery 1 may be reacted sensitively. That is, when the internal temperature of the battery 1 increases slightly, the shape memory alloy may be bent and the gas adsorption pack 21 may be perforated or torn by the shape memory alloy.

In addition, the gas adsorber 20 may be attached to the upper surface of the electrode assembly. In this case, gas rising to the top due to low density may be immediately removed without affecting the charging and discharging of a secondary battery, thereby providing higher stability.

The shape memory alloy 22 is preferably located near the middle of the battery case cover 10. In this case, when swelling of the battery 1 occurs due to increase in internal temperature, the volume expands first near the middle, enabling a more rapid response.

For example, the shape memory alloy 22 may have a thin or elongated shape. When a secondary battery is operated at normal temperature, the shape memory alloy 22 may have a straight shape. When internal temperature increases due to gas generation, at least one end may be bent to release the gas adsorbent by piercing the gas adsorption pack 21.

For example, the shape memory alloy 22 may have a tapered shape and a pointed tip.

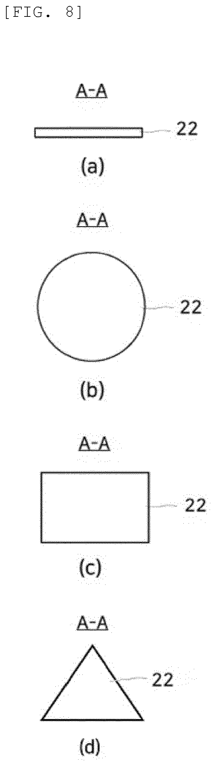

As shown in FIG. 8 below, a shape memory alloy 22 having an elongated shape may have various cross-sectional shapes. For example, the cross-section of the shape memory alloy 22 may be plate-shaped, circular, triangular, square, or pentagonal.

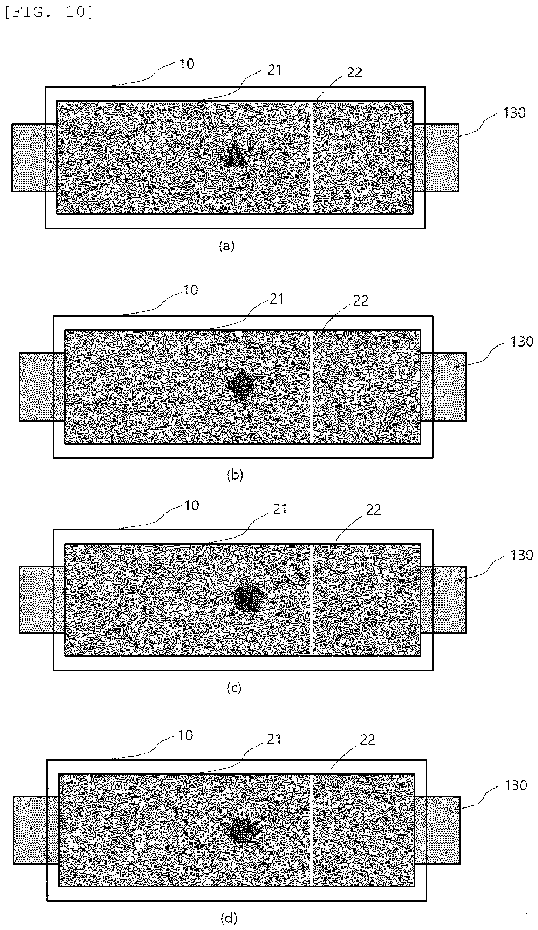

As shown in FIG. 10 below, the thin-film type shape memory alloy 22 may have various shapes, for example, a triangular, rhombic, pentagonal, or hexagonal shape.

For example, when the shape memory alloy 22 is heat-treated at high temperature in a bent shape, deformed into a straight shape at low temperature, and then installed inside the battery case, when gas is generated inside the secondary battery under abnormal operating conditions and internal temperature increases, the shape memory alloy is bent and penetrates the gas adsorption pack 21, exposing the gas adsorbent to adsorb and remove the gas, thereby preventing battery overheating or fire and case deformation.

Hereinafter, the shape at low temperature of the shape memory alloy 22 is referred to as a deformed form or a deformed state, and return to the form before deformation at a shape recovery temperature is referred to as a restored form or restored state.

For example, the deformed and restored part of the shape memory alloy 22 may have a pointed end. In this case, the gas adsorption pack 21 may be easily pierced and the gas adsorbent may be easily released.

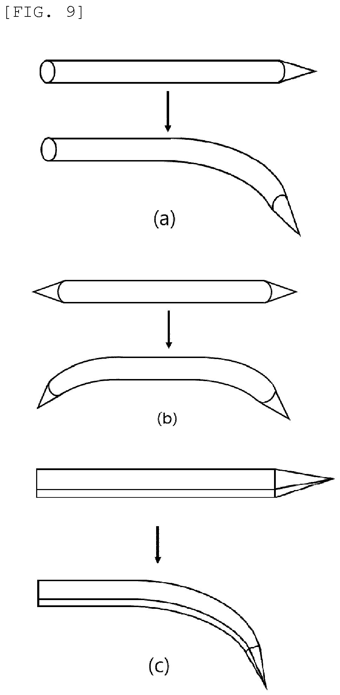

For example, the shape memory alloy 22 may have one of the structures shown in FIG. 9. At a shape recovery temperature, one end or both ends are bent toward the gas adsorption pack 21 and become a restored form. The gas adsorption pack 21 is perforated or torn by the shape memory alloy, which has become a restored form, and the gas adsorbent is released through this process to absorb gas, thereby ensuring battery stability.

For example, the gas adsorber may be installed so that the shape memory alloy is positioned between the inner wall of the case cover and the gas adsorption pack, or the shape memory alloy is positioned on the side of the gas adsorption pack positioned on the inner wall of the case cover. In this case, charging and discharging of a secondary battery may not be affected. In addition, by responding sensitively to increase in battery internal temperature, battery stability may be improved and battery case deformation may be prevented.

When the shape memory alloy is installed on the side of the gas adsorption pack located on an inner wall of the case cover, the shape memory alloy may be installed on one side or both sides of the gas adsorption pack. In this case, the gas adsorption pack may be opened more quickly so that gas may be effectively adsorbed.

For example, the gas adsorption pack and the shape memory alloy may be fixed with PET tape, but the present invention is not limited thereto.

In addition, the gas adsorber may be installed on top of the electrode assembly. In this case, charging and discharging of a secondary battery may not be affected. In addition, by responding sensitively to increase in battery internal temperature, battery stability may be improved and battery case deformation may be prevented.

The present invention includes the battery case, an electrode assembly accommodated inside the battery case, and an electrolyte configured to be charged inside the battery case.

The electrode assembly may be a jelly-roll type electrode assembly formed by winding after a separator is interposed between long sheet-type positive and negative electrodes, a stack-type electrode assembly consisting of unit cells of a stacked structure in which rectangular positive and negative electrodes are interposed between separators, a stack-folding type electrode assembly in which unit cells are wound by a long separation film, or a lamination-stack type electrode assembly in which unit cells are stacked in a state interposed between separators and attached to each other, without being limited thereto.

In addition, the electrode assembly has electrode tabs (not shown) extending therefrom. For example, a positive electrode tab extends from the positive electrode, and a negative electrode tab extends from the negative electrode. Here, when the electrode assembly is configured in a state in which a plurality of positive electrodes and a plurality of negative electrodes are laminated, the electrode tab extends from each of the positive electrodes and the negative electrodes. In this case, the electrode tabs may be connected to other components such as electrode leads 130 without being directly exposed to the outside of the case.

The electrode leads 130 are partially electrically connected to the electrode tabs extending from the positive or negative electrode, respectively. One end of the electrode lead is connected to the electrode tab, the other end is exposed to the outside of the case, and the other end exposed to the outside may function as an electrode terminal. Thus, the secondary battery may be charged and discharged by connecting a charger or a load to the other end of the electrode lead 130. In addition, to increase the degree of sealing with the battery case and secure electrical insulation at the same time, an insulating film may be attached to a portion of the upper and lower surfaces of the electrode leads.

For example, the positive electrode may be prepared by applying a positive electrode assembly including a positive electrode active material onto a positive electrode current collector and then performing drying. A binder, a conductive material, a filler, and the like may be selectively further included in the positive electrode assembly as needed.

For example, the positive electrode current collector may be formed to have a thickness of 3 to 500 µm. A positive electrode current collector having high conductivity without causing chemical change to a battery may be used in the present invention without particular limitation. For example, the positive electrode current collector may include one or more selected from the group consisting of stainless steel, aluminum, nickel, titanium, fired carbon, surface-treated aluminum, and surface-treated stainless steel. For example, the surface treatment may be performed using one or more selected from the group consisting of carbon, nickel, titanium, and silver.

In addition, fine irregularities may be formed on the surface of the positive electrode current collector to increase the adhesive strength of a positive electrode active material. In this case, various forms such as films, sheets, foils, nets, porous materials, foams, and non-woven fabrics are possible.

The positive electrode active material is a material capable of causing an electrochemical reaction, and includes two or more transition metals as a lithium transition metal oxide. For example, the positive electrode active material may include layered compounds such as lithium cobalt oxide (LiCoO₂) and lithium nickel oxide (LiNiO₂) substituted with one or more transition metals; lithium manganese oxide substituted with one or more transition metals; a lithium nickel-based oxide represented by Chemical Formula LiNi_{1-y}MyO₂ (M includes at least one element of Co, Mn, Al, Cu, Fe, Mg, B, Cr, Zn, and Ca, and 0.01≤y≤0.7); a lithium nickel cobalt manganese composite oxide represented by Li_{1+z}Ni_{b}Co_{1-(b+c+d)}MdO₍₂₋ₑ₎Ae (-0.5≤z≤0.5, 0.1≤b≤0.8, 0.1≤c≤0.8, 0≤d≤0.2, 0≤e≤0.2, b+c+d<1, M is Al, Mg, Cr, Ti, Si, or Y, and A is F, P, or Cl), such as Li_{1+z}Ni_{1/3}Co_{1/3}Mn_{1/3}O₂ and Li_{1+z}Ni_{0.4}Mn_{0.4}Co_{0.2}O₂; and an olivine-based lithium metal phosphate represented by Chemical Formula Li₁₊ₓM_{1-y}M_{y}PO_{4-z}X_{z} (M is a transition metal, preferably Fe, Mn, Co, or Ni, M is Al, Mg, or Ti, X is F, S, or N, - 0.5≤x≤+0.5, 0≤y≤0.5, and 0≤z≤0.1), without being limited thereto.

For example, based on a total weight of a mixture of the positive electrode active material, the conductive material, and the binder, the conductive material is added in an amount of 1 to 30 % by weight. A conductive material having conductivity without causing chemical change of a battery may be used in the present invention without particular limitation. For example, the conductive material may include one or more selected from the group consisting of graphite such as natural graphite or artificial graphite; carbon black such as carbon black, acetylene black, ketjen black, channel black, furnace black, lamp black, and summer black; conductive fiber such as carbon fiber or metal fiber; metal powder such as aluminum powder and nickel powder; conductive whiskey such as zinc oxide and potassium titanate; conductive metal oxides such as titanium oxide; and conductive materials such as polyphenylene derivatives and fluorinated carbon.

The binder is a component that assists bonding between an active material and an conductive material and bonding with a current collector. For example, based on a total weight of a mixture of the positive electrode active material, the conductive material, and the binder, the binder may be added in an amount of 1 to 30 % by weight.

For example, the binder may include one or more selected from the group consisting of polyvinylidene fluoride, polyvinyl alcohol, carboxylmethylcellulose (cmC), starch, hydroxypropylcellulose, recycled cellulose, polyvinylpyrrolidone, tetrafluoroethylene, polyethylene, polypropylene, ethylene-propylene-diene monomer (EPDM), sulfonated EPDM, styrene butylene rubber, and fluororubber.

The filler is a component that suppresses expansion of the electrode and is selectively used. A fibrous material that does not cause chemical change of a battery may be used as the filler without particular limitation. For example, olefin-based polymers such as polyethylene and polypropylene; and/or fibrous materials such as glass fiber and carbon fiber may be used as the filler.

For example, the negative electrode may be prepared by applying a negative electrode assembly including a negative electrode active material onto a negative electrode current collector and then performing drying. When necessary, the negative electrode assembly may include components such as a conductive material, a binder, and a filler as described above.

For example, the negative electrode current collector may be formed to have a thickness of 3 to 500 µm. A negative electrode current collector having high conductivity without causing chemical change of a battery may be used in the present invention without particular limitation. For example, one or more selected from the group consisting of copper, stainless steel, aluminum, nickel, titanium, fired carbon, surface-treated copper, surface-treated stainless steel, and aluminum-cadmium alloy may be used as the negative electrode current collector. For example, the surface treatment may be performed using one or more selected from the group consisting of carbon, nickel, titanium, and silver.

In addition, like the positive electrode current collector, the bonding force of the negative electrode active material may be strengthened by forming fine irregularities on the surface of the negative electrode current collector. In this case, various forms such as films, sheets, foils, nets, porous materials, foams, and non-woven fabrics are possible.

For example, the negative electrode active material may include one or more selected from the group consisting of carbon such as non-graphitizing carbon and graphitic carbon; a metal complex oxide such as LiₓFe₂O₃ (0≤x≤1), LiₓWO₂ (0≤x≤1), and SnₓMe₁₋ₓMe_{y}O_{z} (Me: Mn, Fe, Pb, Ge; Me: Al, B, P, Si elements in groups 1, 2, and 3 of the periodic table, halogen; 0≤x≤1; 1≤y≤3; 1≤z≤8); lithium metal; lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, Sb₂O₆, GeO, GeO₂, Bi₂O₃, Bi2O4, Bi₂O₄, and Bi₂O₅; a conductive polymers such as polyacetylene; and an Li-Co-Ni-based material.

The binder, the conductive material, and components added as needed are the same as those in the positive electrode. When necessary, the filler may be optionally added as a component that suppresses expansion of the negative electrode. A fibrous material that does not cause chemical change of a battery may be used as the filler without particular limitation. For example, olefin-based polymers such as polyethylene and polypropylene; and/or fibrous materials such as glass fiber and carbon fiber may be used as the filler.

In addition, the negative electrode assembly may further include other components such as a viscosity modifier and an adhesion promoter selectively or in combination of two or more.

The viscosity modifier is a component that adjusts the viscosity of an electrode assembly so that the mixing process of the electrode assembly and the application process on a current collector may be facilitated. For example, based on a total weight of the negative electrode active material, the conductive material, the binder, and the filler, the viscosity modifier may be added in an amount of 1 to 30 % by weight. Examples of the viscosity modifier may include carboxylmethyl cellulose and/or polyvinylidene fluoride, but the present invention is not limited thereto. In some cases, the solvent described above may serve as the viscosity modifier.

The adhesion promoter is an auxiliary component added to improve adhesion of the active material to the current collector, and may be added in an amount of 10 % by weight or less or an amount of greater than 0 % by weight and 10 % by weight or less, compared to the binder. For example, oxalic acid, adipic acid, formic acid, acrylic acid derivatives, and itaconic acid derivatives may be used as the adhesion promoter.

The separator may be located between the positive electrode and the negative electrode, may electrically insulate the positive electrode and the negative electrode from each other, and may be formed in the form of a porous film so that lithium ions or the like may pass between the positive electrode and the negative electrode. For example, the separator may be made of a porous membrane using polyethylene, polypropylene, or a composite film thereto.

The electrolyte serves to move lithium ions generated by the electrochemical reaction of an electrode during charging and discharging of a secondary battery, and may be an electrolyte, a solid electrolyte, and/or a semi-solid electrolyte.

For example, the electrolyte may be a non-aqueous electrolyte containing a lithium salt.

For example, the non-aqueous electrolyte containing a lithium salt may be composed of an electrolyte and a lithium salt, and the electrolyte may include a non-aqueous organic solvent, an organic solid electrolyte, and an inorganic solid electrolyte.

For example, the non-aqueous organic solvent may be an aprotic organic solvent, and specifically, may include one or more selected from the group consisting of N-methyl-2-pyrrolidinone, propylene carbonate, ethylene carbonate, butylene carbonate, dimethyl carbonate, diethyl carbonate, gamma-butylolactone, 1,2-dimethoxy ethane, tetra hydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate.

For example, the organic solid electrolyte may include one or more selected from the group consisting of polyethylene derivatives, polyethylene oxide derivatives, polypropylene oxide derivatives, phosphoric acid ester polymers, poly agitation lysine, polyester sulfides, polyvinyl alcohols, polyvinylidene fluoride, and polymers containing ionic dissociative groups.

For example, the inorganic solid electrolyte may include one or more selected from the group consisting of nitride, halide, and sulfate of Li, and specifically, may include one or more selected from Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

The lithium salt is a substance that dissolves well in the non-aqueous electrolyte. For example, the lithium salt may include one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₆)₂NLi, chloroborane lithium, lower aliphatic carboxylic acid lithium, 4-phenyl borate lithium, and imides.

In addition, to improve charge and discharge characteristics and flame retardancy, one or more selected from the group consisting of pyridine, triethylphosphite, triethanolamine, cyclic ethers, ethylene diamine, n-glyme, hexaphosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol, and aluminum trichloride may be added to the non-aqueous electrolyte.

In addition, to impart incombustibility to the non-aqueous electrolyte, the non-aqueous electrolyte may further contain a halogen-containing solvent such as carbon tetrachloride or ethylene trifluoride. In addition, carbon dioxide gas may be further included to improve high-temperature storage properties, and fluoro-ethylene carbonate (FEC) and propene sultone (PRS) may be further included. Preferably, the lithium salt-containing non-aqueous electrolyte may be prepared by adding a lithium salt such as LiPF₆, LiClO₄, LiBF₄, and LiN(SO₂CF₃)₂ to a mixed solvent of a cyclic carbonate of EC or PC, which is a high-dielectric solvent, and a linear carbonate of DEC, DMC, or EMC, which is a low-viscosity solvent.

For example, the solid electrolyte may include one or more selected from the group consisting of organic solid electrolytes, inorganic solid electrolytes with ionic conduction activity, and complex solid electrolytes.

For example, the semi-solid electrolyte may be a gel-type electrolyte obtained by adding a polymer additive to an electrolyte composed of a lithium salt, additives, and an organic solvent.

For example, the polymer additive may include one or more selected from the group consisting of polyethyleneoxide (POE) and polytetrafluoroethylene (PTFE).

The electrode assembly includes electrode tabs. The electrode tabs are connected to the positive and negative electrodes of the electrode assembly, protrude from one side of the electrode assembly to the outside, and serve as a path for electrons to move between the inside and outside of the electrode assembly.

The electrode leads are connected to the electrode tabs of the electrode assembly by spot welding, and a portion of the electrode lead is wrapped with an insulator. The insulator is limited to a sealing part where the upper case and lower case of the battery case are heat-sealed, and the electrode lead is bonded to the battery case by the insulator. In addition, the insulator prevents electricity generated from the electrode assembly from flowing to the battery case through the electrode lead and maintains the sealing of the battery case. Accordingly, the insulator is made of a nonconductive material that do not conduct electricity.

As the insulator, an insulating tape that is easy to attach to the electrode lead and has a relatively thin thickness is often used, but the present invention is not limited thereto and various members capable of insulating the electrode lead may be used.

One end of the electrode lead is connected to the electrode tab and the other end protrudes out of an battery case. That is, the electrode leads include a positive electrode lead that has one end connected to the positive electrode tab and extends in the direction in which the positive electrode tab protrudes and a negative electrode lead that has one end connected to the negative electrode tab and extends in the direction in which the negative electrode tab protrudes. In addition, the other ends of both the positive electrode lead and the negative electrode lead protrude out of the battery case. With this configuration, electricity generated inside the electrode assembly may be supplied to the outside. In addition, since the positive electrode tab and the negative electrode tab protrude in various directions, the positive electrode lead and the negative electrode lead may also extend in various directions.

For example, the battery case may be formed of a laminate sheet structure of inner layer/metal layer/outer layer.

Since the inner layer is in direct contact with the electrode assembly, the inner layer must have insulation and electrolyte resistance, and must have sealing properties for sealing against the outside. That is, the sealing portion where the inner layers are thermally bonded to each other must have excellent thermal bonding strength. The inner layer may be made of a material having excellent chemical resistance and sealing properties. For example, the material having excellent chemical resistance and sealing properties may include one or more selected from the group consisting of a polyolefin-based resin such as polypropylene, polyethylene, polyethylene acrylic acid, and polybutylene, a polyurethane resin, and a polyamide resin, without being limited thereto. Thereamong, polypropylene having excellent chemical resistance and excellent mechanical properties such as tensile strength, rigidity, surface hardness, and impact resistance is preferably used.

The metal layer is in contact with the inner layer and serves as a barrier layer to prevent moisture or various gases from penetrating into the battery. For example, the metal layer may be made of one or more selected from the group consisting of aluminum, aluminum alloy, copper, and iron alloys such as stainless steel that are lightweight and have excellent formability.

In addition, the outer layer is provided on the other side of the metal layer, and the outer layer may be formed using a heat-resistant polymer with excellent tensile strength, moisture permeability, and air permeability to protect the electrode assembly and to secure heat resistance and chemical resistance. For example, polyamide or polyethylene terephthalate may be used, without being limited thereto.

The secondary battery may preferably be a pouch-type battery. In this case, the risk of explosion or fire may be prevented by adsorbing gas generated inside the battery, various sizes and shapes may be realized, and high energy density may be achieved.

For example, the secondary battery may have a gas adsorption pack blocked from outside air or opened. That is, the gas adsorption pack is blocked from outside air when the battery operates normally or before the battery deteriorates. When gas is generated due to deterioration of the battery or abnormal operation of the battery, the gas adsorption pack is opened and the gas adsorbent leaks out to absorb and remove the gas, thereby securing battery stability and reducing battery resistance to improve battery performance. Also, the battery may be operated even after the gas adsorption pack is opened. When gas is generated inside a conventional battery, the battery case is perforated to discharge and remove the gas. In this case, an electrolyte flow out from the perforated battery case and the battery no longer operates.

A battery module may be formed by laminating a plurality of secondary batteries according to the present invention in a vertical or horizontal direction. In this case, gas generated inside a battery case due to abnormal operation of the battery may be easily removed, and the battery may operate even after the gas is removed.

In addition, a battery pack may be formed by laminating a plurality of battery modules in a vertical or horizontal direction. In this case, gas generated inside a battery case due to abnormal operation of the battery may be easily removed, and the battery may operate even after the gas is removed.

A method of manufacturing a secondary battery according to the present invention may include a step of manufacturing a positive electrode and a negative electrode by applying positive electrode active material slurry obtained by dissolving a positive electrode active material in a solvent onto a positive electrode current collector and applying negative electrode active material slurry obtained by dissolving a negative electrode active material in a solvent onto a negative electrode current collector; a step of forming a unit cell by interposing and laminating separators between the manufactured positive and negative electrodes; a step of forming an electrode assembly by laminating the formed unit cells; and a step of receiving the formed electrode assembly in a case with a gas adsorber attached to the inner wall of a case cover and injecting an electrolyte.

As another example, the method of manufacturing a secondary battery may include a step of manufacturing a positive electrode and a negative electrode by applying positive electrode active material slurry obtained by dissolving a positive electrode active material in a solvent onto a positive electrode current collector and applying negative electrode active material slurry obtained by dissolving a negative electrode active material in a solvent onto a negative electrode current collector; a step of forming a unit cell by interposing and laminating separators between the manufactured positive and negative electrodes; a step of forming an electrode assembly by laminating the formed unit cells; a step of installing a gas adsorber on the upper portion of the formed electrode assembly; and a step of accommodating the electrode assembly having the gas adsorber in a case and injecting electrolyte.

Embodiments of the present invention will be described in detail with reference to the drawings.

FIG. 2 below illustrates the battery 1 according to one embodiment of the present invention, and shows a side view of the gas adsorber 20 accommodated inside the battery case cover 10 filled with the electrode assembly 110 and an electrolyte 120.

The gas adsorber 20 is attached to the inner wall of the battery case cover 10. In the gas adsorber 20, the shape memory alloy 22 is installed between the inner wall of the case cover and the gas adsorption pack 21.

FIG. 3 below shows a top view of the gas adsorber 20 accommodated inside a battery case cover 10 according to one embodiment of the present invention. Specifically, the shape memory alloy 22 is installed between the inside of the case cover and the gas adsorption pack 21.

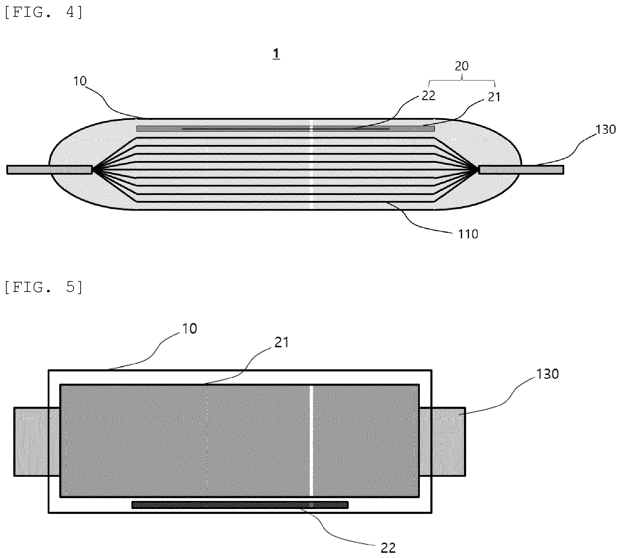

FIG. 4 below illustrates the battery 1 according to one embodiment of the present invention, and shows a side view of the gas adsorber 20 accommodated inside the battery case cover 10 filled with the electrode assembly 110 and the electrolyte 120.

The gas adsorber 20 is attached to the inner wall of the battery case cover 10. In the gas adsorber 20, the shape memory alloy 22 is installed on one side of the gas adsorption pack 21. In the gas adsorber 20, the shape memory alloy 22 may be installed on both sides of the gas adsorption pack 21.

FIG. 5 below shows a top view of the gas adsorber 20 accommodated inside the battery case cover 10 according to one embodiment of the present invention. Specifically, the gas adsorption pack 21 is located inside the case cover, and the shape memory alloy 22 is located on one side of the gas adsorption pack 21. In the gas adsorber 20, the shape memory alloy 22 may be installed on both sides of the gas adsorption pack 21.

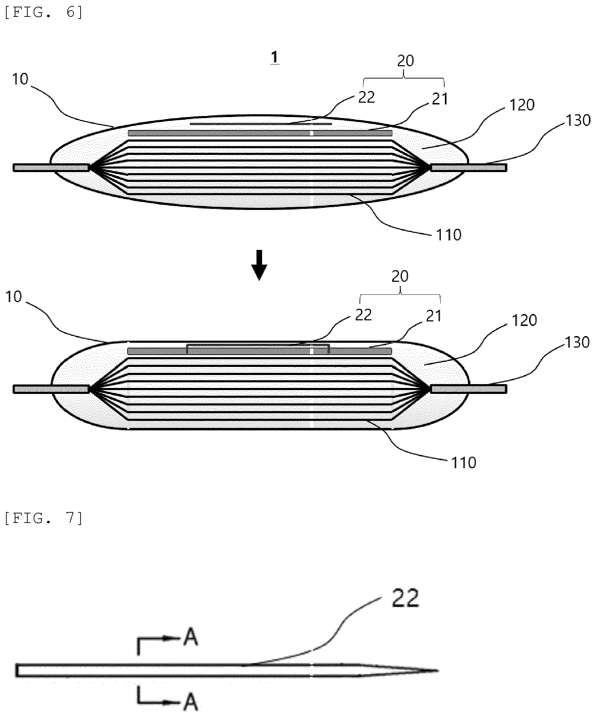

FIG. 6 below is a diagram for explaining change in the gas adsorber 20 according to increase in internal temperature due to gas generation in the secondary battery 1 according to one embodiment of the present invention.

Referring to FIG. 6, as described above, when the internal temperature increases due to gas generation, the shape memory alloy 22 is bent in a predetermined shape toward the gas adsorption pack 21 and penetrates the gas adsorption pack 21, resulting in leakage of the gas adsorbent contained in the gas adsorption pack. Thus, overheating or fire and case deformation may be prevented.

FIG. 7 below illustrates the shape memory alloy 22 according to one embodiment of the present invention and the end thereof formed in a pointed shape.

Referring to FIG. 7, the shape memory alloy 22 has a tapered shape and a pointed tip. In this case, the gas adsorption pack 21 may be pierced or torn more easily.

FIG. 8 below includes diagrams for explaining the cross-sections of the shape memory alloy 22 according to an embodiment of the present invention, and shows an enlarged cross-section of the A-A section of FIG. 7.

As shown in FIG. 8, the cross-section of the shape memory alloy 22 may have various shapes.

FIG. 8A shows a plate-shaped cross-section, and FIG. 8B shows a circular cross-section, FIG. 8C shows a rectangular cross-section, and FIG. 8D shows a triangular cross-section. In addition, the cross-section of the shape memory alloy 22 may have various shapes.

FIG. 9 below includes perspective views for explaining before and after deformation of the shape memory alloy 22.

Referring to FIG. 9A, the overall shape of the shape memory alloy 22 is a thin cylinder. Towards the right end of the shape memory alloy 22, the thickness decreases and the shape becomes sharper. The shape memory alloy 22 is deformed into a straight shape at normal temperature, but is restored to the original shape thereof at a shape recovery temperature, so the right end of the shape memory alloy 22 is bent. In the shape memory alloy 22, the left end that is not bent within a shape recovery temperature range has a flat shape, and the right end that is bent within the shape recovery temperature range has a pointed shape.

Referring to FIG. 9B, the overall shape of the shape memory alloy 22 is a thin cylinder. Towards both ends of the shape memory alloy 22, the thickness decreases and the shape becomes sharper. The shape memory alloy 22 is deformed into a straight shape at normal temperature, but is restored to the original shape thereof above a shape recovery temperature, so both ends of the shape memory alloy 22 are bent in the same direction.

Referring to FIG. 9C, the overall shape of the shape memory alloy 22 is a thin, flat, quadrangular prism. Towards the right end of the shape memory alloy 22, the thickness decreases and the shape becomes sharper. The shape memory alloy 22 is deformed into a straight shape at normal temperature, but is restored to the original shape thereof above a shape recovery temperature, so the right end of the shape memory alloy 22 is bent. In the shape memory alloy 22, the left end that is not bent above a shape recovery temperature range has a flat shape, and the right end that is bent above the shape recovery temperature range has a pointed shape.

FIG. 10 below shows various shapes of a thin-film type shape memory alloy 22. Specifically, FIG. 10A shows the shape memory alloy 22 in a triangular shape, and FIG. 10B shows the shape memory alloy 22 in a rhombus shape, FIG. 10C shows the shape memory alloy 22 in a pentagon shape, and FIG. 3D shows the shape memory alloy 22 in a hexagonal shape.

### [Description of Symbols]

- 1:: SECONDARY BATTERY
- 10:: BATTERY CASE COVER
- 20:: GAS ADSORBER
- 21:: GAS ADSORPTION PACK
- 22:: SHAPE MEMORY ALLOY
- 110:: ELECTRODE ASSEMBLY
- 120:: ELECTROLYTE
- 130:: ELECTRODE LEADS

## Claims

1. A battery case intended to accommodate an electrode assembly and an electrolyte configured to be charged inside the battery case, comprising a battery case cover (10), and a gas adsorber (20) accommodated inside the battery case, **characterised in that** the gas adsorber (20) comprises a gas adsorption pack (21) filled with a gas adsorbent, and a shape memory alloy (22) accommodated inside the battery case, the shape memory alloy (22) being configured to be bent by the increase of an internal temperature of the case so as to penetrate the gas adsorption pack to open the gas adsorption pack.

2. The battery case according to claim 1, wherein the shape memory alloy (22) comprises one or more selected from the group consisting of nickel-titanium alloy (Ni-Ti), copper-zinc alloy (Cu-Zn), copper-zinc-aluminum alloy (Cu-Zn-Al), copper-cadmium alloy (Cu-Cd), nickel-aluminum alloy (Ni-Al), copper-zinc-aluminum alloy (Cu-Zn-Al), and copper-aluminum-nickel alloy (Cu-Al-Ni).

3. The battery case according to claim 1 or 2, wherein the shape memory alloy (22) has a shape recovery temperature of 70 to 100 °C.

4. The battery case according to any of claims 1 to 3, wherein the shape memory alloy (22) has an one-way shape memory effect.

5. The battery case according to any of claims 1 to 4, wherein the gas adsorber (20) is configured to be attached to an inner wall of the case cover (10).

6. The battery case according to any of claims 1 to 5, wherein the gas adsorbent comprises one or more selected from the group consisting of a gas adsorbent molecular sieve, a gas adsorbent metal, and a gas adsorption material.

7. The battery case according to claim 6, wherein the gas adsorbent molecular sieve comprises one or more selected from the group consisting of silica gel, carbon fiber, a porous carbon material, a porous metal oxide, porous gel, and zeolite.

8. The battery case according to claim 6, wherein the gas adsorbent metal comprises one or more selected from the group consisting of nickel (Ni), platinum (Pt), palladium (Pd), calcium (Ca), strontium (Sr), barium (Ba), thallium (Tl), zirconium (Zr), hafnium (Hf), vanadium (V), niobium (Nb), tantalum (Ta), chromium (Cr), molybdenum (Mo), and tungsten (W).

9. The battery case according to claim 6, wherein the gas adsorption material comprises one or more selected from the group consisting of BaTiO₃, PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, sodium hydroxide (NaOH), calcium hydroxide (Ca(OH)₂), and potassium hydroxide (KOH).

10. The battery case according to any of claims 1 to 9, wherein the gas adsorption pack (21) comprises one or more selected from the group consisting of an olefin-based resin, a fluorine-based resin, and a polyamide-based resin.

11. The battery case according to any of claims 1 to 10, wherein the gas adsorber (20) is installed so that the shape memory alloy (22) is positioned between an inner wall of the case cover (10) and the gas adsorption pack (21), or the shape memory alloy (22) is positioned on a side of the gas adsorption pack positioned on an inner wall of the case cover.

12. A secondary battery, comprising the battery case according to any one of claims 1 to 11, an electrode assembly accommodated inside the battery case, and an electrolyte configured to be charged inside the battery case.

13. The secondary battery according to any of claim 12, wherein, in the secondary battery, the gas adsorption pack (21)is blocked from outside air or is opened.

14. The secondary battery according to any of claims 1 to 13, wherein the secondary battery is a pouch-type battery.

## Patentansprüche

1. Batteriegehäuse, welches dazu vorgesehen ist, eine Elektrodenanordnung und einen Elektrolyt aufzunehmen, welcher dazu eingerichtet ist, im Inneren des Batteriegehäuses geladen zu sein, umfassend eine Batteriegehäuseabdeckung (10) und einen Gasadsorber (20), welcher im Inneren des Batteriegehäuses aufgenommen ist,
**dadurch gekennzeichnet, dass** der Gasadsorber (20) einen Gasadsorptionspack (21), welcher mit einem Gasadsorptionsmittel gefüllt ist, und eine Formgedächtnislegierung (22) umfasst, welche im Inneren des Batteriegehäuses aufgenommen ist, wobei die Formgedächtnislegierung (22) dazu eingerichtet ist, durch den Anstieg einer internen Temperatur des Gehäuses gebogen zu werden, um den Gasadsorptionspack zu durchdringen, um den Gasadsorptionspack zu öffnen.

2. Batteriegehäuse nach Anspruch 1, wobei die Formgedächtnislegierung (22) eines oder mehrere umfasst, welche aus der Gruppe ausgewählt sind, welche aus einer Nickel-Titan-Legierung (Ni-Ti), einer Kupfer-ZinkLegierung (Cu-Zn), einer Kupfer-Zink-Aluminium-Legierung (Cu-Zn-Al), einer Kupfer-Cadmium-Legierung (Cu-Cd), einer Nickel-Aluminium-Legierung (Ni-Al), einer Kupfer-Zink-Aluminium-Legierung (Cu-Zn-Al) und einer Kupfer-Aluminium-Nickel-Legierung (Cu-Al-Ni) besteht.

3. Batteriegehäuse nach Anspruch 1 oder 2, wobei die Formgedächtnislegierung (22) eine Formwiederherstellungstemperatur von 70 bis 100 °C aufweist.

4. Batteriegehäuse nach einem der Ansprüche 1 bis 3, wobei die Formgedächtnislegierung (22) einen Einweg-Formgedächtniseffekt aufweist.

5. Batteriegehäuse nach einem der Ansprüche 1 bis 4, wobei der Gasadsorber (20) dazu eingerichtet ist, an einer Innenwand der Gehäuseabdeckung (10) angebracht zu sein.

6. Batteriegehäuse nach einem der Ansprüche 1 bis 5, wobei das Gasadsorptionsmittel eines oder mehrere umfasst, welche aus der Gruppe ausgewählt sind, welche aus einem Gasadsorptionsmittel-Molekularsieb, einem Gasadsorptionsmittel-Metall und einem Gasadsorptionsmaterial besteht.

7. Batteriegehäuse nach Anspruch 6, wobei das Gasadsorptionsmittel-Molekularsieb eines oder mehrere umfasst, welche aus der Gruppe ausgewählt sind, welche aus Silikagel, Kohlenstofffaser, einem porösen Kohlenstoffmaterial, einem porösen Metalloxid, einem porösen Gel und Zeolith besteht.

8. Batteriegehäuse nach Anspruch 6, wobei das Gasadsorptionsmittel-Metall eines oder mehrere umfasst, welche aus der Gruppe ausgewählt sind, welche aus Nickel (Ni), Platin (Pt), Palladium (Pd), Calcium (Ca), Strontium (Sr), Barium (Ba), Thallium (TI), Zirkonium (Zr), Hafnium (Hf), Vanadium (V), Niob (Nb), Tantal (Ta), Chrom (Cr), Molybdän (Mo) und Wolfram (W) besteht.

9. Batteriegehäuse nach Anspruch 6, wobei das Gasadsorptionsmaterial eines oder mehrere umfasst, welche aus der Gruppe ausgewählt sind, welche aus BaTiO₃, Pb(Mg₃Nb_{2/3})O₃-PbTiO₃ (PMN-PT), Hafniumoxid (HfO₂), SrTiO₃, SnO₂, CeO₂, MgO, NiO, CaO, ZnO, ZrO₂, Y₂O₃, Al₂O₃, TiO₂, Natriumhydroxid (NaOH), Calciumhydroxid (Ca(OH)₂) und Kaliumhydroxid (KOH) besteht.

10. Batteriegehäuse nach einem der Ansprüche 1 bis 9, wobei der Gasadsorptionspack (21) eines oder mehrere umfasst, welche aus der Gruppe ausgewählt sind, welche aus einem Harz auf Olefinbasis, einem Harz auf Fluorbasis und einem Harz auf Polyamidbasis besteht.

11. Batteriegehäuse nach einem der Ansprüche 1 bis 10, wobei der Gasadsorber (20) so installiert ist, dass die Formgedächtnislegierung (22) zwischen einer Innenwand der Gehäuseabdeckung (10) und dem Gasadsorptionspack (21) positioniert ist oder die Formgedächtnislegierung (22) an einer Seite des Gasadsorptionspacks positioniert ist, welcher an einer Innenwand der Gehäuseabdeckung positioniert ist.

12. Sekundärbatterie, welche das Batteriegehäuse nach einem der Ansprüche 1 bis 11, eine Elektrodenanordnung, welche im Inneren des Batteriegehäuses aufgenommen ist, und einen Elektrolyten umfasst, welcher dazu eingerichtet ist, im Inneren des Batteriegehäuses geladen zu sein.

13. Sekundärbatterie nach Anspruch 12, wobei, in der Sekundärbatterie, der Gasadsorptionspack (21) gegenüber Außenluft blockiert ist oder geöffnet ist.

14. Sekundärbatterie nach einem der Ansprüche 1 bis 13, wobei die Sekundärbatterie eine beutelförmige Batterie ist.

## Revendications

1. Boîtier de batterie destiné à accueillir un ensemble électrode et un électrolyte configuré pour être chargé à l'intérieur du boîtier de batterie, comprenant un couvercle de boîtier de batterie (10), et un adsorbeur de gaz (20) logé à l'intérieur du boîtier de batterie, **caractérisé en ce que** l'adsorbeur de gaz (20) comprend un bloc d'adsorption de gaz (21) rempli d'un adsorbant de gaz, et un alliage à mémoire de forme (22) logé à l'intérieur du boîtier de batterie, l'alliage à mémoire de forme (22) étant configuré pour être plié par l'augmentation d'une température interne du boîtier de manière à pénétrer dans le bloc d'adsorption de gaz pour ouvrir le bloc d'adsorption de gaz.

2. Boîtier de batterie selon la revendication 1, dans lequel l'alliage à mémoire de forme (22) comprend un ou plusieurs éléments sélectionnés dans le groupe consistant en un alliage nickel-titane (Ni-Ti), un alliage cuivre-zinc (Cu-Zn), un alliage cuivre-zinc-aluminium (Cu-Zn-Al), un alliage cuivre-cadmium (Cu-Cd), un alliage nickel-aluminium (Ni-Al), un alliage cuivre-zinc-aluminium (Cu-Zn-Al) et un alliage cuivre-aluminium-nickel (Cu-Al-Ni).

3. Boîtier de batterie selon la revendication 1 ou 2, dans lequel l'alliage à mémoire de forme (22) présente une température de reprise de forme de 70 à 100 °C.

4. Boîtier de batterie selon l'une quelconque des revendications 1 à 3, dans lequel l'alliage à mémoire de forme (22) présente un effet de mémoire de forme simple sens.

5. Boîtier de batterie selon l'une quelconque des revendications 1 à 4, dans lequel l'adsorbeur de gaz (20) est configuré pour être fixé à une paroi interne du couvercle de boîtier (10).

6. Boîtier de batterie selon l'une quelconque des revendications 1 à 5, dans lequel l'adsorbant de gaz comprend un ou plusieurs éléments sélectionnés dans le groupe consistant en un tamis moléculaire adsorbant les gaz, un métal adsorbant les gaz et un matériau d'adsorption de gaz.

7. Boîtier de batterie selon la revendication 6, dans lequel le tamis moléculaire adsorbant les gaz comprend un ou plusieurs éléments sélectionnés dans le groupe consistant en un gel de silice, une fibre de carbone, un matériau carboné poreux, un oxyde métallique poreux, un gel poreux et une zéolite.

8. Boîtier de batterie selon la revendication 6, dans lequel le métal adsorbant les gaz comprend un ou plusieurs éléments sélectionnés dans le groupe consistant en le nickel (Ni), le platine (Pt), le palladium (Pd), le calcium (Ca), le strontium (Sr), le baryum (Ba), le thallium (Tl), le zirconium (Zr), l'hafnium (Hf), le vanadium (V), le niobium (Nb), le tantale (Ta), le chrome (Cr), le molybdène (Mo) et le tungstène (W).

9. Boîtier de batterie selon la revendication 6, dans lequel le matériau d'adsorption de gaz comprend un ou plusieurs éléments sélectionnés dans le groupe consistant en BaTiO₃, PB(Mg₃Nb_{2/3})O₃-PbTiO₃ (PMN-PT), l'oxyde d'hafnium (HfO₂), SrTiO₃, SnO₂, CeO₂, MgO, NiO, CaO, ZnO, ZrO₂, Y₂O₃, Al₂O₃, TiO₂, l'hydroxyde de sodium (NaOH), l'hydroxyde de calcium (Ca(OH)₂) et l'hydroxyde de potassium (KOH).

10. Boîtier de batterie selon l'une quelconque des revendications 1 à 9, dans lequel le bloc d'adsorption de gaz (21) comprend un ou plusieurs éléments sélectionnés dans le groupe consistant en une résine à base d'oléfine, une résine à base de fluor et une résine à base de polyamide.

11. Boîtier de batterie selon l'une quelconque des revendications 1 à 10, dans lequel l'adsorbeur de gaz (20) est installé de sorte que l'alliage à mémoire de forme (22) soit positionné entre une paroi interne du couvercle de boîtier (10) et le bloc d'adsorption de gaz (21), ou que l'alliage à mémoire de forme (22) soit positionné sur un côté du bloc d'adsorption de gaz positionné sur une paroi interne du couvercle de boîtier.

12. Batterie secondaire, comprenant le boîtier de batterie selon l'une quelconque des revendications 1 à 11, un ensemble électrode logé à l'intérieur du boîtier de batterie, et un électrolyte configuré pour être chargé à l'intérieur du boîtier de batterie.

13. Batterie secondaire selon la revendication 12, dans laquelle, dans la batterie secondaire, le bloc d'adsorption de gaz (21) est bloqué par rapport à l'air extérieur ou est ouvert.

14. Batterie secondaire selon l'une quelconque des revendications 1 à 13, dans laquelle la batterie secondaire est une batterie de type poche.
